## Europäisches Patentamt
## European Patent Office
## Office européen des brevets

(19)

(11) Numéro de publication: **0 194 954**
**B1**

(12)
# FASCICULE DE BREVET EUROPÉEN

(45) Date de publication du fascicule du brevet:
**08.06.88**

(51) Int. Cl.⁴: **B 60 P 1/64**

(21) Numéro de dépôt: **86420069.6**

(22) Date de dépôt: **10.03.86**

(54) **Dispositif pour la manutention et la translation sur un véhicule d'une charge telle qu'un conteneur ou une benne.**

(30) Priorité: **11.03.85 FR 8504052**

(43) Date de publication de la demande:
**17.09.86 Bulletin 86/38**

(45) Mention de la délivrance du brevet:
**08.06.88 Bulletin 88/23**

(84) Etats contractants désignés:
**AT BE CH DE GB IT LI LU NL SE**

(56) Documents cité:
**BE-A-818 077**
**BE-A-864 072**
**FR-A-2 185 520**
**FR-A-2 286 725**
**FR-A-2 315 409**
**FR-A-2 459 152**

(73) Titulaire: **BENNES MARREL, Société Anonyme dite, Zone Industrielle Sud, F-42161 Andrézieux Boutheon Cédex (FR)**

(72) Inventeur: **Corompt, Antoine, 63 Rue Bergson, F-42000 Saint Etienne (FR)**

(74) Mandataire: **Rinuy, Santarelli, 14, avenue de la Grande Armée, F-75017 Paris (FR)**

EP 0 194 954 B1

## Description

La présente invention est relative à un dispositif destiné à équiper un véhicule, tel que par exemple un camion, pour assurer la manutention et la translation d'une charge, telle qu'une benne ou un conteneur.

On connaît des dispositifs autonomes prévus pour équiper un camion, en vue de manipuler un conteneur, notamment pour effectuer les opérations suivantes:

- dépose au sol du conteneur porté par le camion;

- chargement sur le camion d'un conteneur posé au sol;

- basculement vers la haut de l'avant du conteneur dont l'arrière pivote sur le camion, pour une opération dite de "bennage".

Des dispositifs de ce type sont decrits notamment dans les brevets français numéros 2 185 520, et 2 315 409. Ils sont connus sous la dénomination commerciale "AMPLIROLL".

Dans ces dispositifs connus, l'axe de bennage qui équipe transversalement l'arrière de la bielle basculante portant le conteneur, est fixe par rapport au châssis du camion. Cette structure définit, pour le centre de gravité du conteneur porté en position de transport, un emplacement sur le châssis du camion, qui correspond à une répartition des charges donnée entre les divers essieux du véhicule. Cette répartition des charges est satisfaisante pour certains véhicules routiers.

Par contre, on constate que cette répartition ne donne plus satisfaction lorsque la charge du ou des essieux avant doit eprésenter plus de 40 % de la charge totale, ce qui est le cas des véhicules routiers à deux essieux avant.

La présente invention a pour but d'éviter ces inconvénients, tout en conservant l'entraxe de base d'un appareil de manutention standard, ce qui permet entre autres, d'assurer, sur cet appareil un gain de puissance important (35 % environ) pour réaliser les opérations du début de bennage.

Un dispositif selon l'invention comprend un mécanisme de manutention et de bennage porté par le châssis d'un véhicule, et il est caractérisé en ce que en ce que ce mécanisme de manutention et de levage équipe un cadre muni de moyens permettant, d'une part de le faire coulisser à volonté vers l'avant ou vers l'arrière le long du châssis, d'autre part, de le verrouiller sur le châssis lorsqu'il est en position avant de transport.

Suivant une caractéristique préférée de l'invention, le cadre coulissant comporte deux glissières rectilignes, qui coopèrent avec deux rails longitudinaux du châssis.

Suivant une autre caractéristique préférée de l'invention, la partie centrale des rails du châssis comporte plusieurs rouleaux fous, sur lesquels roulent les glissières du cadre.

Suivant une autre caractéristique préférée de l'invention, des profils pliés en L surmontent les rails du châssis, pour se rabattre au-dessus d'une aile des glissères mobiles du cadre, afin d'empêcher tout soulèvement intempestif de l'appareil pendant son utilisation.

Suivant une autre caractéristique préférée de l'invention, le châssis porte des crochets avant et arrière dont chacun a son bec orienté vers le haut et vers l'arrière du véhicule, tandis que, par ailleurs, des traverses de verrouillage équipent le cadre coulissant, pour venir s'engager sous les crochets du châssis, lorsque le cadre se trouve en position avant de transport.

Suivant une autre caractéristique préférée de l'invention, des moyens de translation comportant au moins un vérin hydraulique à double effet sont prévus entre le châssis et le cadre coulissant.

Suivant une autre caractéristique préférée de l'invention, le vérin de translation occupe une position sensiblement horizontale, entre le châssis et le cadre coulissant ce qui correspond à un encombrement minimum, permettant de loger l'appareil sur différents types de véhicules.

Le dessin annexé, donné à titre d'exemple non limitatif, permettra de mieux comprendre les caractéristiques de l'invention.

Figure 1 est une vue schématique montrant un véhicule routier à deux essieux avant, équipé d'un dispositif selon l'invention, qui porte un conteneur en position de transport sur route.

Figure 2 montre l'ensemble à une position de manoeuvre correspondant, par exemple, à l'une des phases de chargement ou de déchargement du conteneur.

Figure 3 montre l'ensemble en position de bennage.

Figure 4 est une vue en élevation illustrant le détail du dispositif selon l'invention.

Figure 5 est une perspective en coupe illustrant la structure d'un des rails du châssis et celle de la glissière correspondante du cadre coulissant.

On a représenté sur les dessins, un camion 1, comportant deux essieux avant 2, et deux essieux arrière 3. Ce camion est prévu pour charger, benner, ou manipuler un conteneur 4 à l'aide d'un mécanisme du type connu sous la dénomination commerciale "AMPLIROLL", tel que décrit par exemple dans les brevets français 2 185 520, et 2 315 409. Ce mécanisme, désigné ici sous la référence globale 5, comprend notamment à l'avant, une potence télescopique pourvue d'un bras vertical 6, dont le sommet est constitué par un crochet 7. Ce dernier vient s'engager derrière une anse de manutention 8, qui équipe, à la manière connue, la partie supérieure du panneau vertical avant du conteneur 4.

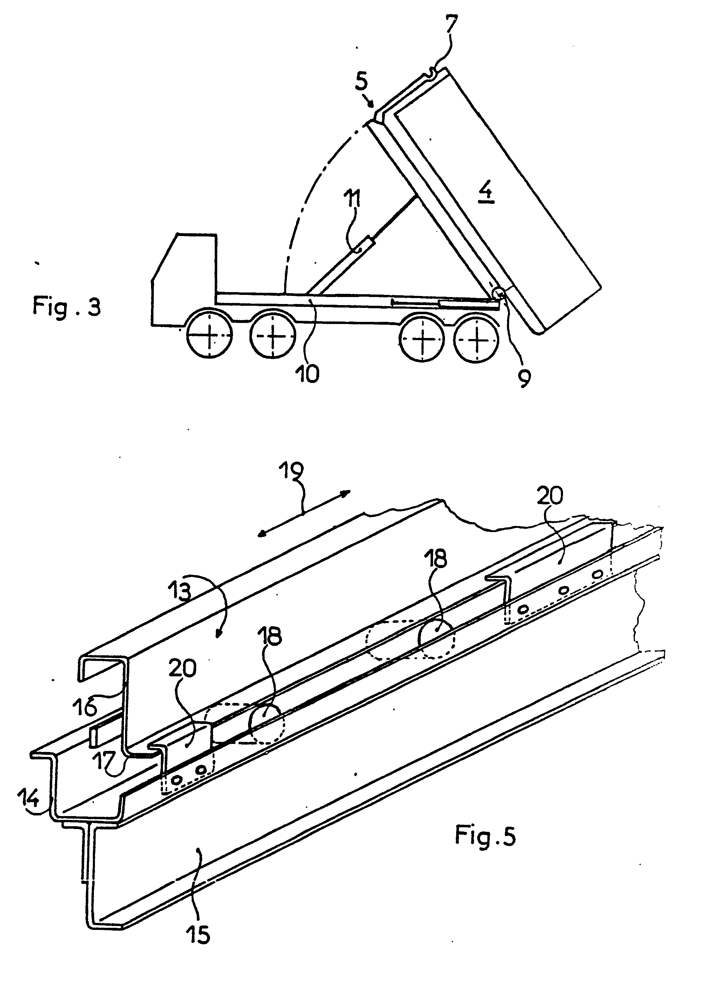

Selon l'invention, l'ensemble du mécanisme AMPLIROLL 5, y compris son axe d'articulation arrière 9 et le point d'appui inférieur 10 de son vérin élévateur 11 (figure 3), est monté sur un chariot ou cadre coulissant 12. Ce cadre 12 comporte notamment deux glissières longitudinales 13, dont chacune peut coulisser dans un rail longitudinal 14 qui équipe la partie supérieure du longeron 15 correspondant sur le châssis du camion 1.

Chaque glissière 13 du cadre 12 a une section transversale en U ouverte vers le bas, l'aile intérieure 16 du U étant plus longue que l'autre, pour se terminer, vers le bas, par un rebord 17, rabattu horizontalement.

Chaque rail 14 du châssis a une section transversale en U ouverte vers le haut. A l'intérieur du rail 14, sont disposés des rouleaux 18, sur lesquels l'aile 17 de la glissière 13 peut rouler, lorsqu'elle se déplace vers l'avant ou vers l'arrière (flèche double 19).

Enfin, pour empêcher tout soulèvement du cadre 12 au-dessus des rails 14, chaque rail 14 est surmonté par des cornières ou profils pliés n L 20, qui le surmontent, pour se rabattre au-dessus de l'aile horizontale 17 des glissières 13.

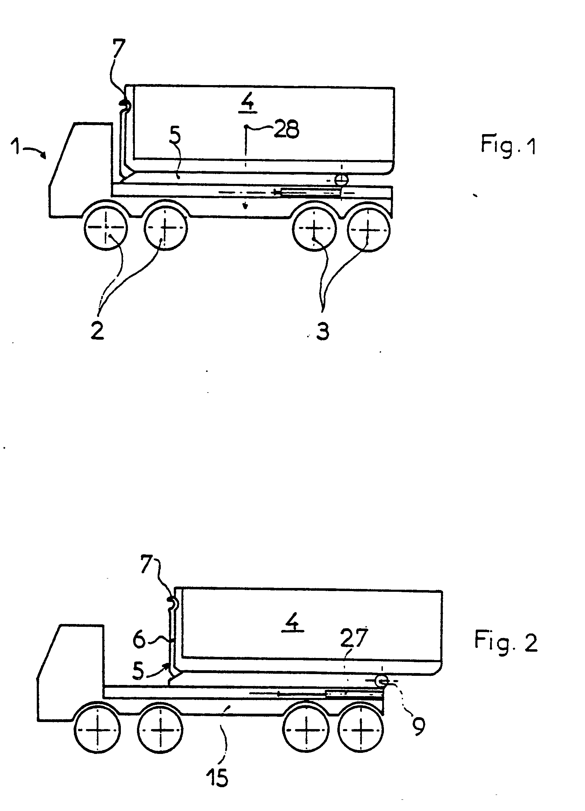

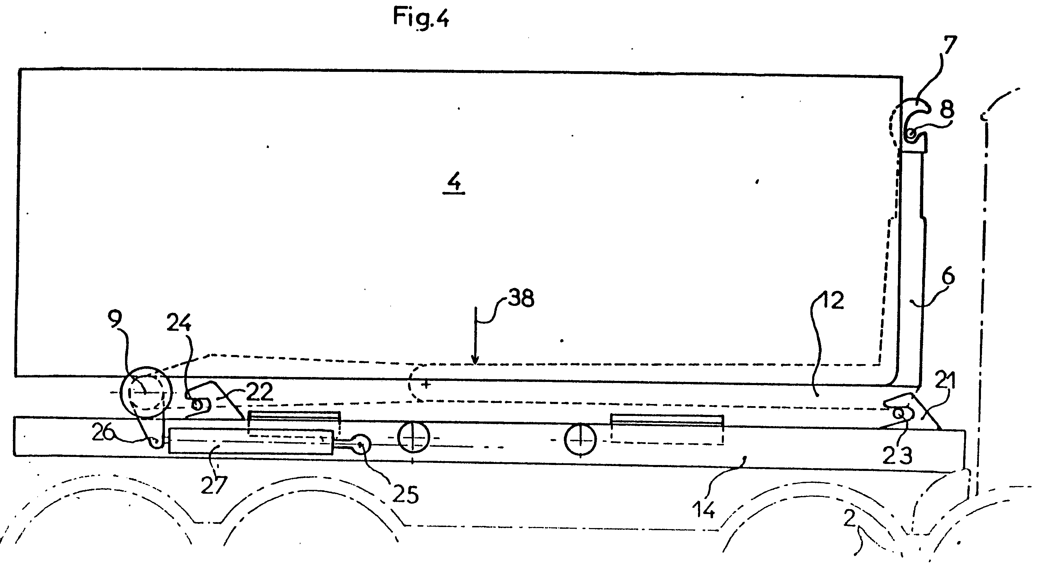

Les rails 14 fixés au châssis 15 du camion 1 comportent par ailleurs un crochet avant 21 et un crochet arrière 22. Chacun de ces crochets comporte un bec qui dépasse vers le haut, et en direction de l'arrière, pour recevoir, lorsque le cadre 12 est en position avant de transport (figures 1 et 4), une traverse de verrouillage (référencée 23 pour l'avant, et 24 pour l'arrière. Ces traverses 23 et 24 sont solidaires du cadre 12.

Enfin, entre un point d'articulation 25 solidaire des rails 14 et des longerons 15 du châssis, et un point de poussée 26 solidaire du cadre 12, on prévoit un vérin à double effet 27, dont la position est sensiblement horizontale, entre les deux rails 14. Ce vérin hydraulique 27 est commandé par des moyens d'alimentation et de distribution hydraulique de type connu, non représentés.

Le fonctionnement est le suivant:

Lorsque le vérin 27 est allongé, le cadre 12 occupe la position arrière illustrée sur les figures 2 et 3. Le mécanisme de manutention AMPLIROLL peut alors être utilisé de la manière connue:

- soit pour benner en soulevant le conteneur 4 au moyen du vérin 11, comme illustré sur la figure 3;

- soit pour déposer au sol le conteneur 4, en agissant sur la potence 6.

Dans ce cas, l'axe arrière 9 se trouve disposé à l'arrière des longerons 15 du châssis. Par contre, lorsque le conteneur 4 est à la position reculée mais horizontale illustrée sur la figure 2, il suffit d'agir sur le vérin 27 pour faire avancer le cadre 12 ainsi que son équipement 4, 5 vers l'avant, jusqu'à la position illustrée sur la figure 1. Dans ce cas, le centre de gravité 28 se trouve ramené très en avant des essieux arrière 3, à une position de transport qui satisfait aux exigences du Code de la Route. A la fin du mouvement d'avancement du cadre 12, les traverses 23 et 24 de ce dernier viennent s'engager, chacune, sous le bec du crochet 21 et 22 correspondant. Ainsi, à la position de transport (figure 4), l'ensemble du cadre 12 est solidement verrouillé sur les rails 14 des longerons 15.

## Revendications

1. Dispositif comprenant un mécanisme de manutention et de bennage (5), porté par les longerons (15) du châssis d'un véhicule (1), caractérisé en ce que ce mécanisme de manutention et de bennage (5) équipe un cadre (12) muni de moyens permettant, d'une part, de le faire coulisser à volonté vers l'avant ou vers l'arrière (19) le long des longerons (15) du châssis et, d'autre part, de le verrouiller sur ce même châssis lorsqu'il est en position avant de transport.

2. Dispositif suivant la revendication 1, caractérisé en ce que le cadre coulissant (12) comporte deux glissières rectilignes (13) qui coopèrent avec deux rails longitudinaux (14) équipant les longerons (15) du châssis.

3. Dispositif suivant la revendication 2, caractérisé en ce que chaque rail (14) a une section en U, ouverte vers le haut, dont la partie centrale comporte plusieurs rouleaux fous (18), sur lesquels roulent les glissières (13) du cadre (12).

4. Dispositif suivant la revendication 2 ou 3, caractérisé en ce que des profils (20) pliés en L, surmontent les rails (14) du châssis pour se rabattre au-dessus d'une aile (17) des glissières (13), afin d'empêcher tout soulèvement intempestif du cadre (12), pendant son utilisation.

5. Dispositif suivant l'une quelconque des revendications 2, 3 ou 4, caractérisé en ce que chaque glissière (13) a une section transversale en U, ouverte vers le bas, dont la branche (16) la plus proche du centre du véhicule (1) est plus longue et se termine vers le bas par une aile (17) rabattue horizontalement en direction de l'autre glissière (13), pour s'engager sous les profils pliés (20) correspondants.

6. Dispositif suivant l'une quelconque des revendications précédentes, caractérisé en ce que le châssis du véhicule (1) porte des crochets avant (21) et arrière (22), dont chacun a son bec orienté vers le haut et vers l'arrière du véhicule (1), tandis que par ailleurs, des traverses de verrouillage avant (23) et arrière (24) équipent le cadre coulissant (12) pour venir s'engager sous les crochets (21) et (22) du châssis, lorsque le cadre (12) se trouve en position avant de transport.

7. Dispositif suivant l'une quelconque des revendications précédentes, caractérisé en ce que des moyens de translation comportant au moins un vérin hydraulique à double effet (27) sont prévus, entre le châssis et le cadre coulissant (12).

8. Dispositif suivant la revendication 7, caractérisé en ce que le vérin de translation (27) occupe une position sensiblement horisontale entre un point d'articulation (25) sur le longeron (15) du châssis, et un point de poussée (26) solidaire de la partie inférieure du cadre coulissant (12).

## Patentansprüche

1. Vorrichtung mit einem Förder- und Kippmechanismus (5), der von den Längsträgern (15) des Chassis eines Fahrzeugs (1) getragen ist, dadurch gekennzeichnet, daß der Förder- und Kippmechanismus (5) einen Rahmen (12) aufweist, welcher mit Mitteln ausgestattet ist, die einerseits ein beliebiges Verschieben nach vorn oder hinten entlang der Längsträger (15) des Chassis und andererseits ein Verriegeln auf demselben Chassis gestatten, wenn er sich in der vorgeschobenen Stellung für den Transport befindet.

2. Vorrichtung nach Anspruch 1, dadurch gekennzeichnet, daß der Verschieberahmen (12) zwei geradlinige Laufschienen (13) aufweist, die mit zwei Längsschienen (14) zusammenwirken, mit denen die Längsträger (15) des Chassis ausgerüstet sind.

3. Vorrichtung nach Anspruch 2, dadurch gekennzeichnet, daß jede Längsschiene (14) einen nach oben offenen U-förmigen Querschnitt aufweist, dessen Mittelabschnitt mehrere lose Rollen (18) abstützt, auf welchen die Laufschienen (13) des Rahmens (12) abrollen.

4. Vorrichtung nach Anspruch 2 oder 3, dadurch gekennzeichnet, daß sich L-Profilstücke (20) über die Längsschienen (14) des Chassis erheben, um eine Abkantung (17) der Laufschienen (13) zum Verhindern jeglicher unangebrachter Anhebung des Rahmens (12) während seiner Benutzung zu übergreifen.

5. Vorrichtung nach einem der Ansprüche 2, 3 oder 4, dadurch gekennzeichnet, daß eine jede Laufschiene (13) einen nach unten offenen U-förmigen Querschnitt aufweist, dessen der Mitte des Fahrzeugs (1) näherer Schenkel (16) verlängert ist und nach unten in einer Abkantung (17) endet, die sich horizontal in Richtung der anderen Führungsschiene (13) erstreckt, um unter die zugehörigen L-Profilstücke (20) zu greifen.

6. Vorrichtung nach einem der vorhergehenden Ansprüche, dadurch gekennzeichnet, daß das Chassis des Fahrzeugs (1) vordere Haken (21) und hintere Haken (22) trägt, die mit ihren Maulöffnungen nach oben und nach rückwärts zum Fahrzeug (1) gerichtet sind, während an dem Verschieberahmen (12) vordere Querriegel (23) und hintere Querriegel (14) angebracht sind, um in Eingriff mit den Haken (21 bzw. 22) zu gelangen, wenn sich der Rahmen (12) in seiner vorgeschobenen Förderstellung befindet.

7. Vorrichtung nach einem der vorhergehenden Ansprüche, dadurch gekennzeichnet, daß die Mittel zum Längsverschieben, die aus mindestens einem doppelt wirkenden hydraulischen Kraftzylinder (27) bestehen, zwischen dem Chassis und dem Verschieberahmen (12) vorgesehen sind.

8. Vorrichtung nach Anspruch 7, dadurch gekennzeichnet, daß der Verschiebezylinder (27) eine hauptsächlich horizontale Stellung zwischen dem Anlenkpunkt (25) am Längsträger (15) des Chassis und einen am unteren Teil des Verschieberahmens (12) angeordneten Druckausübungspunkt (26) einnehmen.

## Claims

1. Device comprising a handling and tapping mechanism (5), carried by the side bars (15) of the chassis of a vehicle (1), characterised in that this handling and tapping mechanism (5) is fitted on a frame (12) provided with means which, on the one hand, enable it to be slid as desired towards the front or towards the rear (19) along the side bars (15) of the chassis and, on the other hand, enable to be locked onto this same chassis when it is in the front position for transport.

2. Device according to claim 1, characterised in that the sliding frame (12) comprises two rectilinear slide rails (13) which co-operate with two longitudinal bars (14) fitted on the side bars (15) of the chassis.

3. Device according to claim 2, characterised in that each rail (14) has a U-shaped section, open towards the top, and of which the central part comprises several free rolling rollers (18) on which the slide rails (13) of the frame (12) roll.

4. Device according to claim 2 or 3, characterised in that the rails (14) of the chassis are surmounted by sections (29) bent into an L-shape and bent back over a leg (17) of the slide rails (13) in order to prevent any inadvertent lifting of the frame (12) during its use.

5. Device according to any one of claims 2, 3 or 4, characterised in that each slide rail (13) has a U-shaped cross section, open towards the bottom, and of which the side (16) closest to the centre of the vehicle (1) is longer and ends towards the bottom in a leg (17) bent horizontally in the direction of the other slide rail (13) in order to be engaged under the corresponding bent sections (20).

6. Device according to any one of the preceding claims, characterised in that the chassis of the vehicle (1) carries front (21) and rear (22) hooks, each of which has its catch oriented towards the top and towards the rear of the vehicle (1), while, moreover, front (23) and rear (24) locking cross-pieces are fitted on the sliding frame (12) in order to engage under the hooks (21) and (22) of the chassis, when the frame (12) is in the front position for transport.

7. Device according to any one of the preceding claims, characterised in that translation means comprising at least one double acting hydraulic cylinder (27) are provided between the chassis and the sliding frame. (12).

8. Device according to claim 7, characterised in that the translation cylinder (27) occupies a substantially horizontal position between an articulation point (25) on the side bar (15) of the chassis, and a thrust point (26) which is integral with the lower part of the sliding frame (12).

Fig. 1

Fig. 2

Fig.4

**Fig . 3**

**Fig.5**